# EUROPÄISCHE PATENTANMELDUNG

(11) **EP 0 663 352 A1**
(43) Veröffentlichungstag der Anmeldung: **19.07.1995**
(21) Anmeldenummer: 94120317.6
(22) Anmeldetag: 21.12.1994
(51) Int. Cl.: B65F 3/00, G01S 15/88, G01S 7/52, B60R 21/34

(54) **Überwachungsvorrichtung für ein am Heck eines Abfallsammelfahrzeuges angebrachtes Trittbrett**

(30) Priorität: 23.12.1993 DE 9319891 U
(71) Anmelder: MOBA-Electronic Gesellschaft für Mobil-Automation mbH, D-65604 Elz (DE)
(72) Erfinder: Horn, Alfons, D-65589 Hadamar-Steinbach (DE)
(74) Vertreter: Schoppe, Fritz, Dipl.-Ing.

(57) **Zusammenfassung**

Eine Überwachungsvorrichtung für ein am Heck eines Abfallsammelfahrzeugs (10) angebrachtes Trittbrett (14) umfaßt einen Ultraschallsendeempfänger (16), der oberhalb des Trittbretts (14) angeordnet ist, wobei die Hauptkeule der Strahlungscharakteristik auf die obere Oberfläche des Trittbretts (14) gerichtet ist, und eine Signalverarbeitungsschaltung (40), die auf die Unterbrechung der Ultraschallerfassung des Trittbretts (14) anspricht.

Die Überwachungsvorrichtung ermöglicht die Erfassung des Zustands eines Trittbretts (14) zur Erfassung eines unbesetzten Zustands des Trittbretts (14) und löst einen Alarm aus, wenn die Überwachungsvorrichtung das Trittbrett (14) nicht mehr erfaßt oder wenn eine Fehlfunktion vorliegt.

## Beschreibung

Die vorliegende Erfindung bezieht sich auf eine Überwachungsvorrichtung zur Überwachung eines am Heck eines Abfallsammelfahrzeugs angebrachten Trittbretts, und insbesondere auf eine sichere Überwachung des Zustandes des Trittbretts.

Vorrichtungen zur Überwachung des Trittbretts sind in Fachkreisen bekannt. Eine solche Vorrichtung ermöglicht die Überwachung eines Trittbretts über einen Kontaktschalter, der durch die Belastung des Trittbretts ausgelöst wird.

Bei dieser relativ einfachen Vorrichtung wird lediglich festgestellt, ob das Trittbrett belastet ist oder nicht. Sollte es zu einer Fehlfunktion dieser Überwachungsvorrichtung kommen, so wird diese nicht festgestellt. Ferner ist eine Manipulation dieser Vorrichtung leicht möglich, da z.B. durch Unterschieben eines Holzkeils zwischen das Trittbrett und dessen Auflage ein Kontakt des Trittbretts mit dem Kontaktschalter bei einer Belastung verhindert wird. Diese Manipulationen erfolgen häufig durch die Müllwerker selbst, was folglich zu einem unerlaubten Mitfahren der Müllwerker auf den hinteren Trittbrettern eines Abfallsammelfahrzeuges führt, wodurch die Unfallhäufigkeit steigt.

Ausgehend von diesem Stand der Technik liegt der vorliegenden Erfindung die Aufgabe zugrunde, eine Überwachungsvorrichtung für ein am Heck eines Abfallsammelfahrzeugs angebrachtes Trittbrett zu schaffen, die sowohl dann, wenn sich ein Müllwerker auf dem Trittbrett befindet, als auch dann, wenn die Überwachungsvorrichtung insgesamt eine Fehlfunktion aufweist, einen Alarm auslöst, die die Sicherheit für die Müllwerker erhöht, und die nicht manipulierbar ist.

Diese Aufgabe wird durch eine Überwachungsvorrichtung gemäß Patentanspruch 1 gelöst.

Die vorliegende Erfindung schafft eine Überwachungsvorrichtung für ein am Heck eines Abfallsammelfahrzeugs angebrachtes Trittbrett, die eine Ultraschallsendeempfangseinrichtung, die oberhalb des Trittbretts angeordnet ist, wobei die Hauptkeule der Strahlungscharakteristik auf die obere Oberfläche des Trittbretts gerichtet ist, und die eine der Ultraschallsendeempfangseinrichtung nachgeschaltete Signalverarbeitungseinrichtung umfaßt, wobei die Signalverarbeitungseinrichtung auf die Unterbrechung der Ultraschallerfassung des Trittbretts anspricht.

Bevorzugte Weiterbildungen der Erfindung sind in den Unteransprüchen definiert.

Bevorzugte Ausführungsbeispiele der vorliegenden Erfindung werden nachfolgend unter Bezugnahme auf die beiliegenden Zeichnungen näher erläutert. Es zeigen:
- Fig. 1: eine Darstellung der Anbringung der Überwachungsvorrichtung an einem Abfallsammelfahrzeug;
- Fig. 2: ein Blockdiagramm der erfindungsgemäßen Überwachungsvorrichtung gemäß einem ersten Ausführungsbeispiel; und
- Fig. 3: ein Blockdiagramm der erfindungsgemäßen Überwachungsvorrichtung gemäß einem zweiten Ausführungsbeispiel.

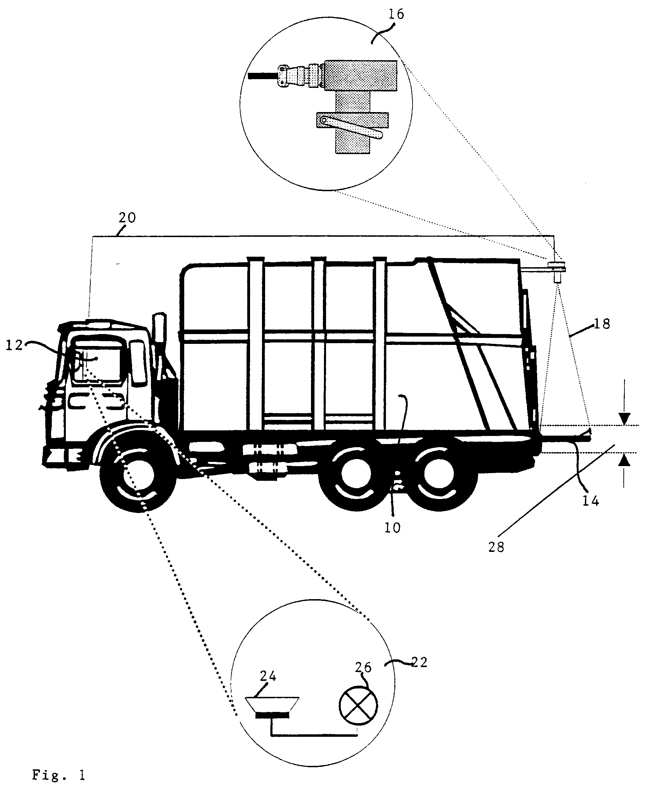

Fig. 1 zeigt die Darstellung eines Abfallsammelfahrzeugs 10, das ein Führerhaus 12 und ein am Heck angebrachtes Trittbrett 14 aufweist.

Oberhalb des Trittbretts 14 befindet sich eine Ultraschallsendeempfangseinrichtung 16, die bevorzugterweise in einer Höhe zwischen 2 m bis 4 m über dem Trittbrett angeordnet ist.

Die gestrichelten Linien 18, die sich von der Ultraschallsendeempfangseinrichtung 16 zu dem Trittbrett 14 erstrecken, verdeutlichen die Ausrichtung, in der die Ultraschallsendeempfangseinrichtung 16 angeordnet sein muß, damit deren Hauptkeule der Strahlungscharakteristika auf das Trittbrett 14 des Abfallsammelfahrzeugs 10 gerichtet ist.

Über ein Verbindungskabel 20 ist die Ultraschallsendeempfangseinrichtung 16 mit der im Führerhaus 12 angeordneten Signalisierungseinrichtung 22 verbunden. Die Signalisierungseinrichtung 22 wird durch eine Signalverarbeitungseinrichtung (in Fig. 1 nicht gezeigt), die auf die Unterbrechung der Ultraschallerfassung des Trittbretts 14 reagiert, aktiviert. Die Signalisierungseinrichtung kann z.B. eine Hupe 24 und/oder eine Leuchte 26 umfassen. Die genaue Ausgestaltung der Signalisierungseinrichtung 22 kann je nach Verwendung vom Kunden frei gewählt werden.

Durch die zwei horizontalen, gestrichelten Linien, die sich parallel zu dem Trittbrett 12 erstrecken, wird ein Referenzbereich 28 definiert, auf den später eingegangen wird.

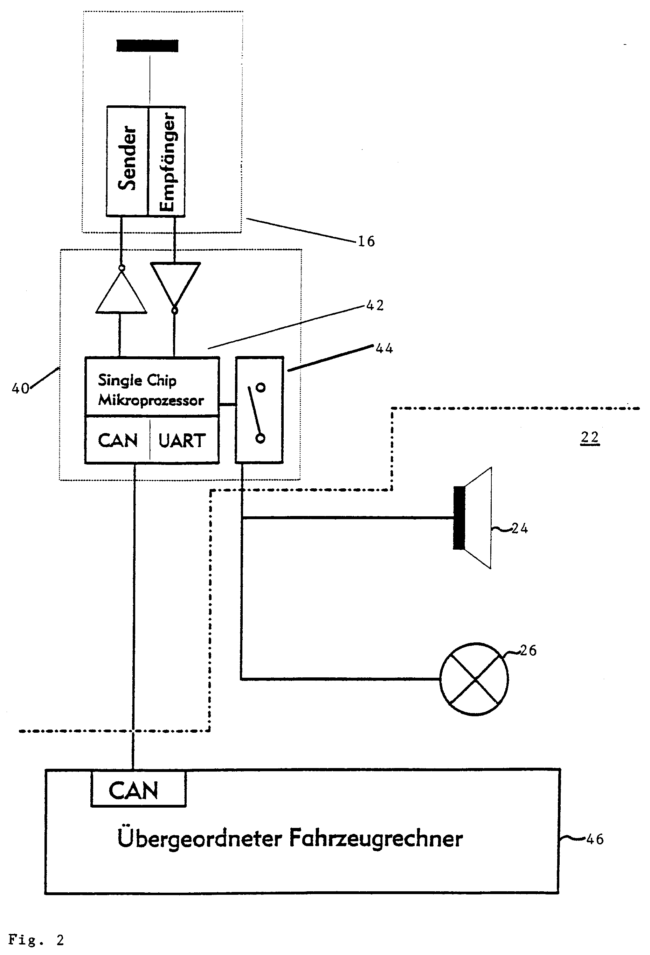

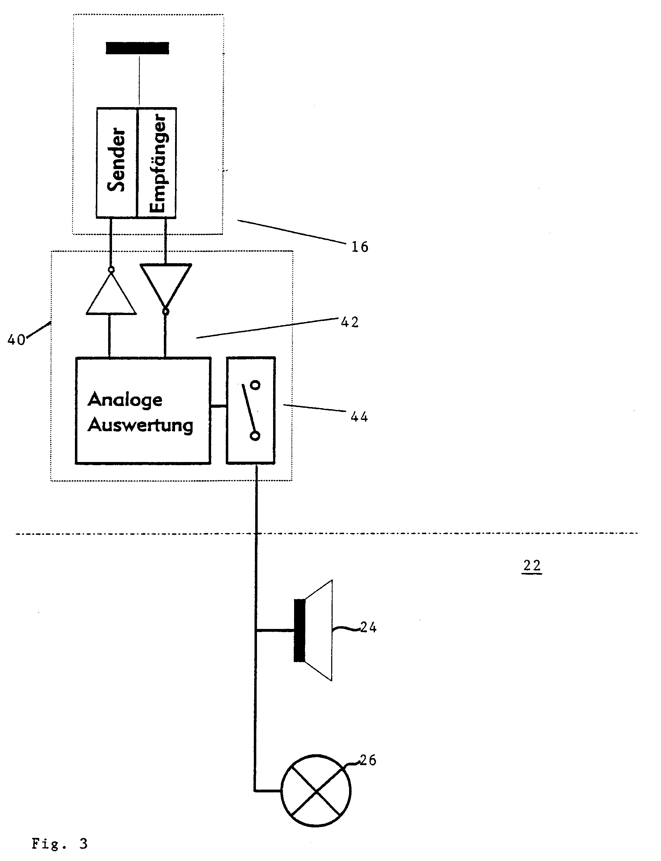

Nachfolgend wird unter Bezugnahme auf Fig. 2 und Fig. 3 der grundsätzliche Aufbau und die Funktionsweise der Überwachungsvorrichtung gemäß der vorliegenden Erfindung beschrieben. Gleiche Bauteile in den verschiedenen Figuren sind mit den gleichen Bezugszeichen versehen.

Fig. 2 zeigt einen grundsätzlichen Aufbau der Überwachungsvorrichtung in Digital-Technik, die die Ultraschallsendeempfangseinrichtung 16, die Signalverarbeitungseinrichtung 40 und die Signalisierungseinrichtung 22 umfaßt.

Die Signalverarbeitungseinrichtung 40 schließt eine Signalauswertungseinrichtung 42 und eine Schaltkontakteinrichtung 44 ein.

Die Signalauswertungseinrichtung 42 umfaßt einen Single-Chip-Mikroprozessor, eine CAN-Schnittstelle (CAN = Controller Aera Network) und eine UART-Schnittstelle (UART = Universal Asynchronous Receiver Transmitter) ein. Über die CAN- und die UART-Schnittstelle ist die Signalauswertungseinrichtung 42 mit einem übergeordneten Fahrzeugrechner 46 verbunden, in dem Informationen über den Zustand des Trittbretts 12 weiterverarbeitet werden können.

Die Schaltkontakteinrichtung 44 ist der Signalauswertungseinrichtung 42 nachgeschaltet.

Die Signalisierungseinrichtung 22 ist der Schaltkontakteinrichtung 44 nachgeschaltet.

Die Schaltung aus Fig. 3 stellt die gleiche Schaltung, wie sie in Fig. 2 gezeigt ist, dar, die in analoger Technik ausgeführt ist. Die in Fig. 3 dargestellte Schaltung unterscheidet sich bezüglich der in Fig. 2 dargestellten Schaltung lediglich darin, daß die Signalauswertung analog erfolgt und keine Weiterleitung von Informationen an einen übergeordneten Fahrzeugrechner 46 durchgeführt wird.

Wie in Fig. 2 umfaßt die Vorrichtung aus Fig. 3 ebenfalls die Ultraschallsendeempfangseinrichtung 16, die Signalverarbeitungseinrichtung 40 mit einer Signalauswertungseinrichtung 42 und einer Schaltkontakteinrichtung 44, und die Signalisierungseinrichtung 22.

Bei beiden Ausführungsbeispielen dient die Schaltkontakteinrichtung 44 zur Ansteuerung der Signalisierungseinrichtung 22.

Neben den bereits erwähnten Komponenten umfaßt die Überwachungsvorrichtung gemäß der vorliegenden Erfindung eine Temperaturmeßeinrichtung (nicht gezeigt), die innerhalb der Ultraschallsendeempfangseinrichtung 16 angeordnet ist, zur Kompensation von Laufzeitänderungen, die durch Temperaturänderungen hervorgerufen wurden. Die Auswertung dieses Temperaturmeßsignals übernimmt die Signalverarbeitungseinrichtung 40 parallel zur eigentlichen Signallaufzeitermittelung. Die Signalverarbeitungseinrichtung 40 kompensiert den durch die Temperaturänderungen hervorgerufenen Laufzeitfehler, indem die Laufzeitänderungen pro Grad Celsius mit in die Signallaufzeitberechnung aufgenommen werden.

Als nächstes wird die Funktionsweise der Überwachungsvorrichtung gemäß der vorliegenden Erfindung näher erläutert.

Durch die Reflektion eines Signals der Ultraschallsendeempfangseinrichtung 16 an der oberen Oberfläche des unbesetzten Trittbretts 14 wird ein Referenzechosignal erzeugt, das eine Referenzlaufzeit festlegt.

Die Signalauswertungseinrichtung 42, die innerhalb der Signalverarbeitungseinrichtung 40 enthalten ist, gibt abhängig von einem Echosignal, das eine bestimmte Laufzeit aufweist, das durch die Reflektion eines Signals der Ultraschallsendeempfangseinrichtung 16 entsteht, eines von drei Zustandssignalen aus.

Das erste Zustandssignal wird ausgegeben, wenn die Laufzeit des Echosignals der Referenzlaufzeit entspricht, wodurch angezeigt ist, daß das Trittbrett 14 unbesetzt ist.

Es wird darauf hingewiesen, daS das erste Zustandssignal auch erzeugt wird, wenn sich die Laufzeit des Echosignals innerhalb einer Toleranz +/- 10 % bezüglich der Referenzlaufzeit befindet. Mit anderen Worten heißt das, daß Reflektionen im Referenzbereich 28 (Fig. 1) keinen Alarm auslösen.

Das zweite Zustandssignal wird ausgegeben, wenn die Laufzeit des Echosignals nicht der Referenzlaufzeit entspricht bzw. außerhalb des Toleranzbereiches liegt, wodurch angezeigt ist, daß das Trittbrett 14 besetzt ist.

Ein drittes Zustandssignal wird ausgegeben, wenn von der Signalauswertungseinrichtung 42 kein Signal von der Ultraschallsendeempfangseinrichtung 16 empfangen wird, wodurch angezeigt wird, daß eine Störung der Ultraschallsendeempfangseinrichtung 16 oder eines Teils der Überwachungsvorrichtung aufgetreten ist.

Die Schaltkontakteinrichtung 44, die der Signalauswertungseinrichtung 42 innerhalb der Signalverarbeitungseinrichtung 40 nachgeschaltet ist, empfängt die oben beschriebenen Zustandssignale. Die Schaltkontakteinrichtung 44 befindet sich in ihrem geschlossenen Zustand, solange das erste Zustandssignal empfangen wird, wodurch keine Aktivierung der Signalisierungseinrichtung 22 erfolgt. Wird das zweite oder das dritte Zustandssignal empfangen, ist die Schaltkontakteinrichtung 44 in ihrem offenen Zustand, wodurch die Signalisierungseinrichtung 22 aktiviert wird.

Es wird darauf hingewiesen, daß die Signalisierungseinrichtung 22 auch dann aktiviert wird, wenn von den vorgeschalteten Elementen kein Signal empfangen wird, was bei einer gesamten oder teilweisen Fehlfunktion der vorgeschalteten Elemente der Fall ist.

Mit anderen Worten bedeutet dies, daß die erfindungsgemäße Überwachungsvorrichtung die obere Oberfläche des unbesetzten Trittbrettes als Referenz erfaßt, d.h. es wird nicht der besetzte Zustand, wie im Stand der Technik, erfaßt, sondern der unbesetzte Zustand des Trittbretts 14. Durch diese Anordnung und Funktionsweise der Überwachungsvorrichtung ist es unmöglich, diese Überwachungsvorrichtung zu manipulieren, da jedes Abdecken der Ultraschallsendeempfangseinrichtung 16 sofort zu einem Auslösen eines Alarms führen würde.

Ferner wird darauf hingewiesen, daS jegliche Fehlfunktion der Überwachungsvorrichtung die Auslösung eines Alarms zur Folge hat.

Es wird weiterhin darauf hingewiesen, daß die Ultraschallsendeempfangseinrichtung 16 und die Signalverarbeitungseinrichtung 40 entweder in einer Baueinheit ausgeführt sein können oder in getrennten Baueinheiten angeordnet sein können. Letzterer Fall bietet den Vorteil, die Signalverarbeitungseinrichtung 40 im Führerhaus 12 des Abfallsammelfahrzeuges 10 anzuordnen.

## Patentansprüche

1. Überwachungsvorrichtung für ein am Heck eines Abfallsammelfahrzeugs (10) angebrachtes Trittbrett (14), gekennzeichnet durch
- eine Ultraschallsendeempfangseinrichtung (16), die oberhalb des Trittbretts (14) angeordnet ist, wobei die Hauptkeule der Strahlungscharakteristik auf die obere Oberfläche des Trittbretts (14) gerichtet ist; und
- eine der Ultraschallsendeempfangseinrichtung (16) nachgeschaltete Signalverarbeitungseinrichtung (40),
wobei die Signalverarbeitungseinrichtung (40) auf die Unterbrechung der Ultraschallerfassung des Trittbretts (14) anspricht.

2. Überwachungsvorrichtung nach Anspruch 1, gekennzeichnet durch
eine im Führerhaus (12) des Abfallsammelfahrzeugs (10) angeordnete Signalisierungseinrichtung (22), die der Signalverarbeitungseinrichtung (40) nachgeschaltet ist, wobei die Signalverarbeitungseinrichtung (40) auf die Unterbrechung der Ultraschallerfassung des Trittbretts (14) anspricht, um die Signalisierungseinrichtung (22) zu aktivieren.

3. Überwachungsvorrichtung nach Anspruch 1 oder 2, dadurch gekennzeichnet,
daß durch Reflektion eines Signals der Ultraschallsendeempfangseinrichtung (16) an der oberen Oberfläche des unbesetzten Trittbretts (14) ein Referenzechosignal erzeugt wird, das eine Referenzlaufzeit festlegt.

4. Überwachungsvorrichtung nach einem der Ansprüche 1 bis 3, dadurch gekennzeichnet,
daß die Signalverarbeitungseinrichtung (40) folgende Merkmale umfaßt:
- eine Signalauswertungseinrichtung (42), die abhängig von einem Echosignal mit einer bestimmten Laufzeit, das durch Reflektion eines Signals der Ultraschallsendeempfangseinrichtung (16) entsteht, eines von drei Zustandssignalen abgibt, wobei das erste Zustandssignal ausgegeben wird, wenn die Laufzeit des Echosignals der Referenzlaufzeit entspricht, wodurch angezeigt ist, daß das Trittbrett (14) unbesetzt ist, das zweite Zustandssignal ausgegeben wird, wenn die Laufzeit des Echosignals der Referenzlaufzeit nicht entspricht, wodurch angezeigt ist, daß das Trittbrett (14) besetzt ist, und das dritte Zustandssignal ausgegeben wird, wenn kein Signal empfangen wird, wodurch eine Störung der Ultraschallsendeempfangseinrichtung (16) angezeigt ist; und
- eine Schaltkontakteinrichtung (44), die der Signalauswertungseinrichtung (42) nachgeschaltet ist, und die in ihrem geschlossenen Zustand ist, solange das erste Zustandssignal empfangen wird, wodurch die Signalisierungseinrichtung (22) nicht aktiviert wird, und die in ihrem offenen Zustand ist, wenn das zweite oder dritte Zustandssignal empfangen wird, oder wenn kein Signal empfangen wird, wodurch die Signalisierungseinrichtung (22) aktiviert wird.

5. Überwachungsvorrichtung nach Anspruch 4, dadurch gekennzeichnet,
daß bei einer Laufzeit des Echosignals innerhalb einer Toleranz von +/- 10 % bezüglich der Referenzlaufzeit das erste Zustandssignal erzeugt wird.

6. Überwachungsvorrichtung nach einem der Ansprüche 1 bis 5, dadurch gekennzeichnet,
daß die Ultraschallsendeempfangseinrichtung (16) in einer Höhe von 2 m bis 4 m oberhalb des Trittbretts (14) angeordnet ist.

7. Überwachungsvorrichtung nach einem der Ansprüche 1 bis 6, dadurch gekennzeichnet,
daß die Ultraschallsendeempfangseinrichtung (16) und die Signalverarbeitungseinrichtung (40) in einer Baueinheit ausgeführt sind.

8. Überwachungsvorrichtung nach einem der Ansprüche 1 bis 6, dadurch gekennzeichnet,
daß die Ultraschallsendeempfangseinrichtung (16) und die Signalverarbeitungseinrichtung (40) in getrennten Baueinheiten angeordnet sind.

9. Überwachungsvorrichtung nach Anspruch 8, dadurch gekennzeichnet,
daß die Signalverarbeitungseinrichtung (40) im Führerhaus (12) des Abfallsammelfahrzeugs (14) angeordnet ist.

10. Überwachungsvorrichtung nach einem der Ansprüche 1 bis 9, dadurch gekennzeichnet,
daß die Signalverarbeitungseinrichtung (40) in Analog-Technik ausgeführt ist.

11. Überwachungsvorrichtung nach einem der Ansprüche 1 bis 9, dadurch gekennzeichnet,
daß die Signalverarbeitungseinrichtung (40) in Digital-Technik ausgeführt ist.

12. Überwachungsvorrichtung nach Anspruch 11, dadurch gekennzeichnet,
daß die Signalauswertungseinrichtung (40) einen Single-Chip-Mikroprozessor, eine CAN-Schnittstelle und eine UART-Schnittstelle umfaßt, wobei der Signalauswertungseinrichtung (42) ein übergeordneter Fahrzeugrechner (46) nachgeschaltet ist, der über die CAN- bzw. UART-Schnittstelle Informationen über den Zustand des Trittbretts (14) erhält und diese weiterverarbeitet.

13. Überwachungsvorrichtung nach einem der Ansprüche 1 bis 12, dadurch gekennzeichnet,
daß die Signalisierungseinrichtung (22) eine Hupe (24) und/oder eine Lampe (26) umfaßt.

14. Überwachungsvorrichtung nach einem der Ansprüche 1 bis 13, dadurch gekennzeichnet,
daß die Ultraschallsendeempfangseinrichtung (16) eine Temperaturmeßeinrichtung zur Kompensation von durch Temperaturänderungen hervorgerufenen Signallaufzeitänderungen umfaßt, wobei die Signalverarbeitungseinrichtung (40) eine Auswertung eines Temperaturmeßsignals der Temperaturmeßeinrichtung parallel zur Signallaufzeitberechnung durchführt, um den durch Temperaturänderungen hervorgerufenen Laufzeitfehler durch Aufnahme der Laufzeitveränderungen pro Grad Celsius in die Signallaufzeitberechnung zu kompensieren.
